# EUROPÄISCHE PATENTSCHRIFT

(11) **EP 3 471 982 B1**
(45) Veröffentlichungstag und Bekanntmachung des Hinweises auf die Patenterteilung: **22.07.2020**
(21) Anmeldenummer: 17732366.4
(22) Anmeldetag: 16.06.2017
(51) Int. Cl.: B60J 5/06, B61D 19/02

(54) **DREIPUNKTLAGERUNG EINER SCHIEBETÜR**
THREE-POINT SUPPORT OF A SLIDING DOOR
MONTAGE EN TROIS POINTS D'UNE PORTE COULISSANTE

(30) Priorität: 16.06.2016 DE 102016111069; 09.05.2017 DE 202017102755 U
(43) Veröffentlichungstag der Anmeldung: 24.04.2019
(73) Patentinhaber: Gebr. Bode GmbH & Co. KG, 34123 Kassel (DE)
(72) Erfinder: THEIS, Christoph, 34537 Bad Wildungen (DE); RASEKHI, Abbas, 34128 Kassel (DE); AREND, Ulrich, 34576 Homburg (DE)
(74) Vertreter: Patentanwälte Bauer Vorberg Kayser
(86) Internationale Anmeldenummer: PCT/EP2017/064762
(87) Internationale Veröffentlichungsnummer: WO 2017/216335

(56) Entgegenhaltungen:
- AU-B2- 522 906
- CH-A- 400 794
- DE-A1- 2 023 826

## Beschreibung

Die vorliegende Anmeldung betrifft eine Vorrichtung zur Führung eines Türelements, insbesondere einer Schiebetür für ein Personenbeförderungsfahrzeug beispielsweise für Schienenfahrzeuge des öffentlichen Nahverkehrs.

Derartige Vorrichtungen sind aus dem Stand der Technik bekannt. Hierbei werden die Schiebetüren in der Regel im oberen Bereich durch ein Führungssystem hängend geführt. Dabei erfolgt eine gezielte Freiheitsbegrenzung translatorisch in allen Achsen und rotatorisch - aufgrund der Aufhängung - horizontal in der Achse quer zur Schieberichtung sowie in der vertikalen Achse. Eine rotatorisch horizontale gezielte Freiheitsbegrenzung in der Achse der Schieberichtung ist wegen des unweit zum Führungssystem liegenden Schwerpunkts der Schiebetür nicht erforderlich. Bei derartigen Vorrichtungen wird die Schiebetür daher im unteren Bereich undefiniert und damit nicht gezielt, beispielsweise in einem U-förmigen Profil begrenzt. Das Dokument AU 522 906 B2 offenbart eine Vorrichtung gemäß dem Oberbegriff des Anspruchs 1.

In einer alternativen aus dem Stand der Technik bekannten Vorrichtung werden die Schiebetüren im unteren Bereich, beispielsweise mittels Laufrollen, geführt. Auch hierbei erfolgt eine gezielte Freiheitsbegrenzung translatorisch in allen Achsen und rotatorisch - aufgrund des Laufsystems - horizontal in der Achse quer zur Schieberichtung sowie in der vertikalen Achse. Eine rotatorisch horizontale gezielte Freiheitsbegrenzung in der Achse der Schieberichtung weist auch diese Vorrichtung nicht auf.

Ferner ist eine Vorrichtung mit einer (definierten oder undefinierten?) quer zur Schieberichtung liegenden Begrenzung bekannt. Hierbei werden mehrere Laufrollen möglichst im maximalen Abstand zueinander - bezogen auf die Achse der Schieberichtung - an der Schiebetür angeordnet. Wegen der Gefahr eines Verklemmens der Schiebetür, ist eine hohe Genauigkeit des Führungsprofils, in denen die Laufrollen laufen, erforderlich, da die Laufrollen auf dauerhafte Anlage bei der Montage eingestellt werden.

Der Erfindung liegt daher die Aufgabe zu Grunde eine gegenüber dem Stand der Technik verbesserte Vorrichtung zur Führung eines Türelements, insbesondere einer Schiebetür für ein Personenbeförderungsfahrzeug bereitzustellen. Insbesondere hat sich die Erfindung zum Ziel gemacht, eine Vorrichtung zur Führung eines Türelements bereitzustellen, die in allen Freiheitsgraden translatorisch sowie rotatorisch eine gezielte Führung erlaubt.

Gelöst wird diese Aufgabe durch eine Vorrichtung mit den Merkmalen des Patentanspruchs 1.

Vorteilhafte Ausgestaltungen und Varianten der Erfindung ergeben sich aus den abhängigen Ansprüchen und der nachfolgenden Beschreibung.

Erfindungsgemäß ist vorgesehen, dass die Vorrichtung zur Führung eines Türelements, insbesondere einer Schiebetür für ein Personenbeförderungsfahrzeug ein erstes und ein zweites Führungsprofil aufweist, wobei beide Führungsprofile parallel beabstandet zueinander angeordnet sind. Ferner weist die Vorrichtung insgesamt drei Führungselemente auf, über die das Türelement führbar mit den beiden Führungsprofilen verbunden ist, wobei zwei der Führungselemente an dem ersten Führungsprofil und eines der Führungselemente an dem zweiten Führungsprofil führbar angeordnet sind.

Eine derartige Vorrichtung mit einer Dreipunktführung erlaubt eine gezielte Freiheitsbegrenzung translatorisch sowie rotatorisch in allen Achsen, so dass dem Türelement nahezu kein Spielraum gewährt wird, der während des Fahrbetriebs zu einem Wackeln des Türelements führt. Insbesondere werden durch die realisierte Dreipunktführung hohe Toleranzen zwischen den beiden Führungsprofilen ausgeglichen, so dass ein Verklemmen des Türelements wirksam verhindert wird. Da keine hohen Genauigkeiten an die Führungsprofile gestellt werden müssen, kann die erfindungsgemäße Vorrichtung gegenüber aus dem Stand der Technik bekannten Vorrichtungen günstiger produziert werden.

Erfindungsgemäß sind die drei Führungselemente an dem Türelement V-förmig zueinander angeordnet. Die drei Führungselemente umspannen somit ein im Wesentlichen gleichschenklig ausgebildetes Dreieck, so dass zwei der Führungselemente in den Ecken des Türelements - bezogen auf die Achse der Schieberichtung - angeordnet sind, vorzugsweise in einem maximalen Abstand zueinander. Das verbleibende eine Führungselement ist sodann - bezogen auf die Erstreckung des Türelements - am gegenüberliegenden Ende des Türelements mittig in Schieberichtung der Achse angeordnet.

Vorzugsweise ist das erste Führungsprofil bezogen auf die Erstreckung des Türelements an einem ersten oberen Ende und das zweite Führungsprofil entsprechend an einem gegenüberliegenden zweiten unteren Ende der Vorrichtung angeordnet, so dass das Türelement über insgesamt zwei Führungsprofile an dem Fahrzeug angebracht ist.

In einer alternativen Ausführungsform kann das erste Führungsprofil an dem zweiten unteren Ende und das zweite Führungsprofil an dem ersten oberen Ende angeordnet sein, d.h. die drei Führungselemente an dem Türelement sind umgekehrt V-förmig zueinander angeordnet.

Vorzugsweise entspricht der Abstand zwischen dem ersten und dem zweiten Führungsprofil im Wesentlichen der Erstreckung des Türelements. Der Abstand der beiden Führungsprofile zueinander ist damit abhängig von der Form des Türelements. Sofern das Türelement flach ausgeführt ist, entspricht der Abstand im Wesentlichen der Länge des Türelements. Sofern das Türelement gebogen ausgeführt ist, entspricht der Abstand im Wesentlichen einer Geraden die die gebogene Funktion an zwei Punkten schneidet.

In einer weiteren bevorzugten Ausführungsform ist das Türelement ein C-förmig ausgebildetes Türelement.

Vorzugsweise umfasst jedes der drei Führungselemente mindestens eine Laufrolle. Das Führungselement kann ferner einen Arm umfassen, wobei der Arm mit einem Ende an dem Türelement fest verbunden ist und am anderen Ende über die Laufrolle in dem Führungsprofil gleitet.

In einer alternativen Ausführungsvariante kann das Führungssystem auch hängend ausgeführt sein.

Vorzugsweise sind beide Führungsprofile im Wesentlichen U-förmig ausgebildet und weisen eine erste und zweite Anlagefläche auf. Hierdurch entsteht innerhalb des Führungsprofils ein Führungskanal, in dem das Führungselement, insbesondere die Laurollen gleitend geführt werden können.

In einer bevorzugten Ausführungsform entspricht der Abstand zwischen der ersten und der zweiten Anlagefläche des Führungsprofils dem Durchmesser der Laufrollen. Insbesondere wird hierdurch in dem Führungsprofil, in welchem das eine Führungselement führbar angeordnet ist, die - in der Achse der Schieberichtung - rotatorisch horizontale Freiheitsbegrenzung nochmals verbessert.

In einem weiteren Aspekt betrifft die vorliegende Erfindung ein Personenbeförderungsfahrzeug enthaltend die erfindungsgemäße Vorrichtung.

Nachfolgend wird die vorliegende Erfindung anhand von Beispielen erläutert.

Im Folgenden wird die Erfindung anhand von Zeichnungen näher erläutert. Im Einzelnen zeigen:

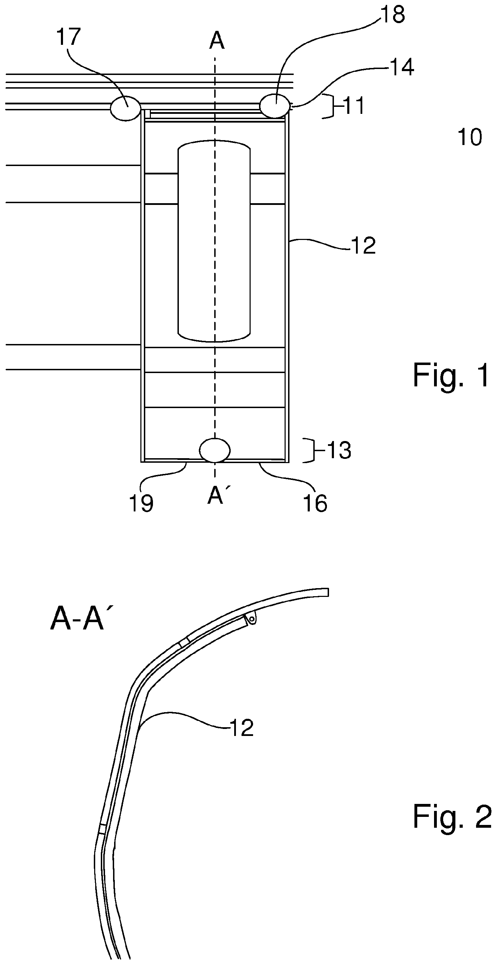

Fig. 1 eine frontale Darstellung einer erfindungsgemäßen Vorrichtung, und Fig. 2 eine Querschnittsdarstellung der erfindungsgemäßen Vorrichtung gemäß Schnitt A-A in Fig.1.

Fig. 1 zeigt frontale Darstellung einer erfindungsgemäßen Vorrichtung 10 zur Führung eines Türelements 12, insbesondere einer Schiebetür für ein Personenbeförderungsfahrzeug. Die Vorrichtung 10 weist ein erstes und ein zweites Führungsprofil 14, 16 auf, wobei beide Führungsprofile 14, 16 parallel beabstandet zueinander angeordnet sind. Der Abstand der beiden Führungsprofile 14, 16 entspricht im Wesentlichen der Erstreckung des Türelements 12. Ferner weist die Vorrichtung 10 insgesamt drei Führungselemente 17, 18, 19 auf, über die das Türelement 12, vorzugsweise gleitend mit den beiden Führungsprofilen 14, 16 verbunden ist. Zwei der Führungselemente 17, 18 sind an dem ersten Führungsprofil 14 und eines der Führungselemente 19 an dem zweiten Führungsprofil 16 angeordnet, so dass die drei Führungselemente an dem Türelement eine V-förmige Anordnung aufweisen. Das erste Führungsprofil 14 ist bezogen auf die Erstreckung des Türelements 12 an einem ersten oberen Ende 11 und das zweite Führungsprofil 16 entsprechend an einem gegenüberliegenden zweiten unteren Ende 13 der Vorrichtung 10 angeordnet.

In Fig. 2 ist eine Querschnittsdarstellung der erfindungsgemäßen Vorrichtung gemäß Schnitt A-A dargestellt, die das Türelement 12 in seinem Querschnitt zeigt. Das Türelement 12 ist in der vorliegenden Ausführungsform C-förmig ausgebildet.

### Bezugszeichenliste

- 10: Vorrichtung
- 11: erstes oberes Ende
- 12: Türelement
- 13: zweites unteres Ende
- 14: erstes Führungsprofil
- 16: zweites Führungsprofil
- 17: erstes Führungselement
- 18: zweites Führungselement
- 19: drittes Führungselement

## Patentansprüche

1. Vorrichtung zur Führung eines Türelements (12), insbesondere einer Schiebetür für ein Personenbeförderungsfahrzeug enthaltend:
- ein erstes und ein zweites Führungsprofil (14, 16), wobei beide Führungsprofile (14, 16) parallel beabstandet zueinander angeordnet sind,
- insgesamt drei Führungselemente (17, 18, 19) über die das Türelement (12) führbar mit den beiden Führungsprofilen (14, 16) verbunden ist, wobei zwei der Führungselemente (17, 18) an dem ersten Führungsprofil (14) und eines der Führungselemente (19) an dem zweiten Führungsprofil (16) führbar angeordnet sind,
wobei
- die drei Führungselemente (17, 18, 19) an dem Türelement (12) V-förmig zueinander angeordnet sind,
- zwei der Führungselemente (17, 18) in den Ecken des Türelements (12)
- bezogen auf die Achse der Schieberichtung - angeordnet sind, und **dadurch gekennzeichnet, dass**
das verbleibende Führungselement (19) - bezogen auf die Erstreckung des Türelements (12) - am gegenüberliegenden Ende des Türelements (12) mittig in Schieberichtung der Achse angeordnet ist, so dass die drei Führungselemente (17, 18, 19) ein im Wesentlichen gleichschenklig ausgebildetes Dreieck umspannen.

2. Vorrichtung nach Anspruch 1, wobei das erste Führungsprofil (14) bezogen auf die Erstreckung des Türelements (12) an einem ersten oberen Ende (11) und das zweite Führungsprofil (16) entsprechend an einem gegenüberliegenden zweiten unteren Ende (13) der Vorrichtung (10) angeordnet ist.

3. Vorrichtung nach Anspruch 1 oder 2, wobei der Abstand zwischen dem ersten und dem zweiten Führungsprofil (14, 16) im Wesentlichen der Erstreckung des Türelements (12) entspricht.

4. Vorrichtung nach einem der vorhergehenden Ansprüche 1 bis 3, wobei das Türelement (12) ein C-förmig ausgebildetes Türelement (12) ist.

5. Vorrichtung nach einem der vorhergehenden Ansprüche 1 bis 4, wobei jedes der drei Führungselemente (17, 18, 19) mindestens eine Laufrolle umfasst.

6. Vorrichtung nach einem der vorhergehenden Ansprüche 1 bis 5, wobei beide Führungsprofile (14, 16) im Wesentlichen U-förmig ausgebildet sind und eine erste und zweite Anlagefläche aufweisen.

7. Vorrichtung nach einem der vorhergehenden Ansprüche 1 bis 6, wobei der Abstand zwischen der ersten und der zweiten Anlagefläche des Führungsprofils (14, 16) dem Durchmesser der Laufrollen entspricht.

8. Personenbeförderungsfahrzeug enthaltend eine Vorrichtung nach einem der Ansprüche 1 bis 7.

## Claims

1. A device for guiding a door element (12), particularly a sliding door for a passenger transport vehicle, comprising:
- a first and a second guiding profile (14, 16), wherein the two guiding profiles (14, 16) are arranged parallel to each other and spaced apart,
- a total of three guiding members (17, 18, 19), via which the door element (12) is connected in a guidable manner to the two guiding profiles (14, 16), wherein two of the guiding members (17, 18) are disposed in a guidable manner on the first guiding profile (14) and one of the guiding members (19) is disposed in a guidable manner on the second guiding profile (16),
wherein
- the three guide members (17, 18, 19) are disposed in a V shape relative to one another on the door element (12),
- two of the guide members (17, 18) are disposed in the corners of the door element (12) with respect to the sliding direction axis, and **characterized in that** the remaining guide member (19), with respect to the extent of the door element (12), is disposed at the opposite end of the door element (12), centrally in the sliding direction of the axis, so that the three guide members (17, 18, 19) span a substantially isosceles triangle.

2. The device according to claim 1, wherein the first guiding profile (14) is disposed at a first upper end (11) with respect to the extent of the door element (12), and the second guiding profile (16), accordingly, is disposed at an opposite second lower end (13) of the device (10).

3. The device according to claim 1 or 2, wherein the distance between the first and the second guiding profile (14, 16) substantially corresponds to the extent of the door element (12).

4. The device according to any one of the preceding claims 1 to 3, wherein the door element (12) is a door element (12) configured in a C-shape.

5. The device according to any one of the preceding claims 1 to 4, wherein each of the three guide members (17, 18, 19) includes at least one roller.

6. The device according to any one of the preceding claims 1 to 5, wherein both guiding profiles (14, 16) are substantially configured in a U-shaped manner and have a first and a second contact surface.

7. The device according to any one of the preceding claims 1 to 6, wherein the distance between the first and the second contact surface of the guiding profile (14, 16) corresponds to the diameter of the rollers.

8. A passenger transport vehicle, comprising a device according to any one of the claims 1 to 7.

## Revendications

1. Dispositif de guidage d'un élément de porte (12), en particulier d'une porte coulissante pour un véhicule de transport de passagers, comprenant:
- des premier et deuxième profilés de guidage (14, 16), dans lequel les deux profilés de guidage (14, 16) sont disposés en étant espacés parallèlement entre eux,
- trois éléments de guidage (17, 18, 19) dans l'ensemble par l'intermédiaire desquels ledit élément de porte (12) est relié aux deux profilés de guidage (14, 16) de manière à pouvoir être guidé, dans lequel deux des éléments de guidage (17, 18) sont disposés de manière à pouvoir être guidés sur le premier profilé de guidage (14) et l'un des éléments de guidage (19) est disposé de manière à pouvoir être guidé sur le deuxième profilé de guidage (16),
dans lequel
- les trois éléments de guidage (17, 18, 19) sont disposés en V l'un par rapport à l'autre sur l'élément de porte (12),
- deux des éléments de guidage (17, 18) sont disposés - par rapport à l'axe de la direction de coulissement - dans les coins de l'élément de porte (12) et **caractérisé par le fait que** l'élément de guidage (19) restant est disposé - par rapport à l'extension de l'élément de porte (12) - à l'extrémité opposée de l'élément de porte (12) de manière centrale dans la direction de coulissement de l'axe de sorte que les trois éléments de guidage (17, 18, 19) définissent un triangle pour l'essentiel isocèle.

2. Dispositif selon la revendication 1, dans lequel, par rapport à l'extension de l'élément de porte (12), le premier profilé de guidage (14) est disposé à une première extrémité supérieure (11) et le deuxième profilé de guidage (16) est disposé de manière correspondante à une deuxième extrémité inférieure (13) opposée du dispositif (10).

3. Dispositif selon la revendication 1 ou 2, dans lequel la distance séparant les premier et deuxième profilés de guidage (14, 16) correspond pour l'essentiel à l'extension de l'élément de porte (12).

4. Dispositif selon l'une quelconque des revendications 1 à 3 précédentes, dans lequel l'élément de porte (12) est un élément de porte en forme de C (12).

5. Dispositif selon l'une quelconque des revendications 1 à 4 précédentes, dans lequel chacun des trois éléments de guidage (17, 18, 19) comprend au moins un galet de roulement.

6. Dispositif selon l'une quelconque des revendications 1 à 5 précédentes, dans lequel les deux profilés de guidage (14, 16) sont réalisés pour l'essentiel en U et présentent des première et deuxième surfaces d'appui.

7. Dispositif selon l'une quelconque des revendications 1 à 6 précédentes, dans lequel la distance séparant les première et deuxième surfaces d'appui du profilé de guidage (14, 16) correspond au diamètre des galets de roulement.

8. Véhicule de transport de passagers contenant un dispositif selon l'une quelconque des revendications 1 à 7.
